# DEMANDE DE BREVET EUROPEEN

(11) **EP 3 343 800 A1**
(43) Date de publication de la demande: **04.07.2018**
(21) Numéro de dépôt: 17210938.1
(22) Date de dépôt: 28.12.2017
(51) Int. Cl.: H04B 7/155, H01Q 1/52, H01Q 17/00

(54) **RELAIS RADIO IP 'MONOBANDE**

(30) Priorité: 29.12.2016 FR 1601895
(71) Demandeur: Thales, 92400 Courbevoie (FR)
(72) Inventeur: SOULIÉ, Antoine, 92622 GENNEVILLIERS CEDEX (FR); CHEVALLIER, Michel, 92622 GENNEVILLIERS CEDEX (FR)
(74) Mandataire: Dudouit, Isabelle

(57) **Abrégé**

Relais radio destiné à être utilisé dans un système de communication comprenant au moins un réseau (2), une station de base accès (30), une station de base relais (10) comprenant un équipement utilisateur relais et plusieurs utilisateurs, caractérisé en ce qu'il comporte au moins les éléments suivants :
• Une première antenne A₁ disposée en haut d'un mât (12) jouant un rôle de relais, ladite première antenne possédant un diagramme de rayonnement disposé essentiellement dans le plan horizontal,
• Une deuxième antenne A₂ située en bas du mât (12) présentant des caractéristiques omnidirectionnelles afin d'assurer une fonction d'accès, un diagramme de rayonnement dans le plan vertical le plus faible possible (gain et ouverture),
• La deuxième antenne A₂ étant située à la verticale sous la première antenne A₁.

## Description

L'invention concerne un système relais radio IP (Internet Protocol) monobande pour l'utilisation dans un réseau de communication LTE (Long Term Evolution). Elle concerne notamment un dispositif capable de réaliser les fonctions suivantes :
- Relayage par fonction de relais au niveau IP, permettant d'adresser à la fois le relais et les terminaux dans le même plan d'adressage,
- Relayage mono-bande, la fonction de relais utilisant le même spectre que la fonction d'accès.

Dans le cas de réseau de communication avec des terminaux mobiles pouvant se déplacer, il est intéressant de disposer de communications avec des élongations (portées radio) plus importantes que celles qui sont offertes par une liaison standard station de base à terminal. Une solution pour augmenter cette élongation est d'implémenter un mode relais.

Le véhicule qui assure le rôle de relayage doit également être vu comme un terminal d'accès et la fonction de relayage doit pouvoir utiliser la même ressource spectrale que la fonction d'accès.

Il est connu de l'art antérieur de fractionner la ressource spectrale, soit dans le domaine temporel, soit dans le domaine fréquentiel. Dans ces deux cas, la fonction de relayage entraîne une diminution de la capacité de communication, en moyenne d'un facteur deux, puisque toute transmission doit utiliser à la fois une ressource en accès et une ressource de relayage.

Dans le domaine temporel, il est nécessaire de mettre en oeuvre un protocole de transmission permettant la réception de données pendant une trame donnée et leur retransmission sur une autre trame. Un protocole qui n'a pas été développé pour le relayage n'est donc pas réalisable.

Dans le domaine fréquentiel, il est connu de l'art antérieur d'utiliser des antennes de type bibande. Chaque antenne bibande est une antenne qui peut prendre en charge l'agrégation de porteuses. Le relayage bibande utilise une bande de fréquence pour réaliser la fonction accès et une bande de fréquence pour le relayage. L'un des inconvénients d'un tel système vient du fait que le relayage nécessite l'utilisation de deux fréquences suffisamment éloignées fréquentiellement pour éviter deux phénomènes :
- Les interférences cosite,
- L'intermodulation produite par la colocalisation de deux transmetteurs générant des hamoniques dans les bandes adjacentes.

Cette solution demande, non seulement, nettement plus de ressources spectrales (de la ressource spectrale pour l'accès et de la ressource spectrale pour le relayage), mais également une séparation fréquentielle suffisante entre les ressources spectrales à l'accès et au relayage. Ceci rend difficile la généralisation de cette solution.

Une autre solution consiste à utiliser des techniques de type réutilisation de fréquence fractionnaire, connues sous l'expression anglo-saxonne « fractional frequency reuse ». Ces techniques sont mises en oeuvre dans les technologies de type 3G LTE (troisième génération) utilisant une seule fréquence. Cette solution consiste à diviser la bande de fréquence en deux sous-bandes, l'une pour l'accès, l'autre pour le relayage. La gestion des interférences se fait au moyen de mécanismes de bandes de gardes dynamiques définis dans la norme LTE. Le partage de la ressource peut être en première approche statique, en second approche semi-dynamique au moyen de l'interface (entre deux voisins) X2 de la station de base eNodeB et d'un lien de collecte (en anglo-saxon backhaul link). Cette solution présente comme inconvénient de ne pas être efficace en termes d'utilisation spectrale et de diminuer la capacité globale du système (débit crête).

L'idée mise en oeuvre dans la présente invention est, d'une part d'isoler spatialement la fonction d'accès de la fonction de relayage, les deux fonctions utilisant la même bande fréquentielle et, d'autre part, d'implémenter la fonction de relayage et la fonction d'accès sur une même base technologique selon le standard 3G LTE (typiquement un lien station de base eNodeB/terminal).

L'invention concerne un relais radio destiné à être utilisé dans un système de communication comprenant au moins un réseau de communication, une station de base accès, une station de base relais comprenant un équipement utilisateur relais et plusieurs utilisateurs, caractérisé en ce qu'il comporte au moins les éléments suivants :
- Une première antenne A₁ disposée en haut d'un mât jouant un rôle de relais, ladite première antenne possédant un diagramme de rayonnement disposé essentiellement dans le plan horizontal,
- Une deuxième antenne A₂ située en bas du mât présentant des caractéristiques omnidirectionnelles afin d'assurer une fonction d'accès et un diagramme de rayonnement dans le plan vertical le plus faible possible (gain et ouverture),
- La deuxième antenne A₂ étant située à la verticale sous la première antenne A₁,
- Une fonction relais configurée pour assurer la mise en oeuvre d'un tunnel entre la station de base relais, la station de base accès et un utilisateur.

La fonction relais est par exemple adaptée à :
- Assurer le démarrage de la station de base relais après l'établissement d'un lien entre le réseau←>la station de base accès←>la station de base relais,
- Assurer la mise en oeuvre d'un tunnel généré par une fonction de coordination du réseau entre la station de base relais et le réseau au-dessus du lien station de base accès et de l'équipement utilisateur UE relais,
- Assurer la mise en oeuvre d'un tunnel entre la fonction relais et la fonction coordination relais.

Selon un mode de réalisation, la première antenne A₁ et la deuxième antenne A₂ sont, dans le plan vertical, équivalentes à des antennes directives avec un pinceau de quelques degrés d'ouverture et dans le plan horizontal la deuxième antenne A₂ est adaptée pour offrir une couverture sectorisée choisie parmi 60°, 120° ou 180°.

Le relais radio peut comporter un élément adapté à éviter la propagation des lobes secondaires desdites première et deuxième antennes A₁ A₂, ledit élément isolant étant disposé sur le mât entre les deux antennes A₁ A₂.

La deuxième antenne A₂ peut être une antenne active adaptée à rejeter du signal dans une direction donnée.

L'invention concerne aussi un procédé mis en oeuvre dans le relais selon l'une des revendications précédentes caractérisé en ce qu'il utilise :
- Une première antenne A₁ disposée en haut d'un mât jouant un rôle de relais, ladite première antenne possédant un diagramme de rayonnement disposé essentiellement dans le plan horizontal,
- Une deuxième antenne A₂ située en bas du mât, ladite deuxième antenne présentant des caractéristiques omnidirectionnelles afin d'assurer une fonction d'accès et un diagramme de rayonnement dans le plan vertical le plus faible possible (gain et ouverture),
- La deuxième antenne A₂ étant située à la verticale sous la première antenne A₁,
- Une fonction relais pour assurer la mise en oeuvre d'un tunnel entre la station de base relais, la station de base accès et un utilisateur.

La fonction relais exécute, par exemple, au moins les étapes suivantes :
- Assurer le démarrage de la station de base relais après l'établissement d'un lien entre le réseau←>la station de base accès←>la station de base relais,
- Assurer la mise en oeuvre d'un tunnel généré par une fonction de coordination du réseau entre la station de base relais et le réseau au-dessus du lien station de base accès et de l'équipement utilisateur UE relais,
- Assurer la mise en oeuvre d'un tunnel entre la fonction relais et la fonction coordination relais.

Selon un mode de réalisation, le procédé comporte au moins les étapes suivantes :
- Une fonction de coordination relais active le terminal, lequel s'accroche à l'eNodeB accès selon un protocole donné,
- Une fois les messages reçus, une fonction relais active l'eNodeB et l'EPC relais,
- L'eNodeB et le EPC relais démarrent une pile protocolaire,
- Lorsque l'EPC relais et l'eNodeB sont prêts à véhiculer du trafic usager message, le relais IP utilise sa table de routage afin que le trafic à destination ou en provenance des terminaux raccordés à l'eNodeB relais soit transmis entre le terminal de relais et l'eNodeB et l'EPC relais,
- On établit un tunnel entre le couple (EPC relais, l'eNodeB relais), et un routeur situé en amont de l'EPC d'accès au-dessus du lien eNodeB accès et de l'équipement utilisateur UE relais,

Le procédé peut utiliser des mécanismes de qualité de service entre le routeur, la fonction de relais IP, l'EPC accès, l'EPC relais et un équipement utilisateur et en exécutant les étapes suivantes :
- Le routeur amont identifie la demande de traitement, message M₁, d'un flux phonie via un protocole d'identification,
- Le routeur amont traduit ce message M₁ en un message de demande de réservation vers l'EPC relais,
- L'EPC relais effectue la réservation de ressources sur l'eNodeB relais,
- L'EPC relais répond positivement au routeur amont,
- Le routeur amont transmet un message de demande de réservation vers L'EPC accès, en augmentant le débit demandé de la valeur nécessaire à la mise en oeuvre d'une encapsulation des paquets pour réaliser un tunnel,
- L'EPC d'accès effectue la réservation de ressources sur l'eNodeB d'accès,
- L'EPC d'accès répond positivement au routeur amont,
- Le routeur amont répond positivement au demandeur de la requête.

D'autres caractéristiques et avantages de l'invention apparaîtront mieux à la lecture de la description qui suit annexée des figures représentant :
- La figure 1, un exemple d'architecture d'un relais radio selon l'invention,
- La figure 2 et la figure 3, un exemple d'enchaînement des étapes.

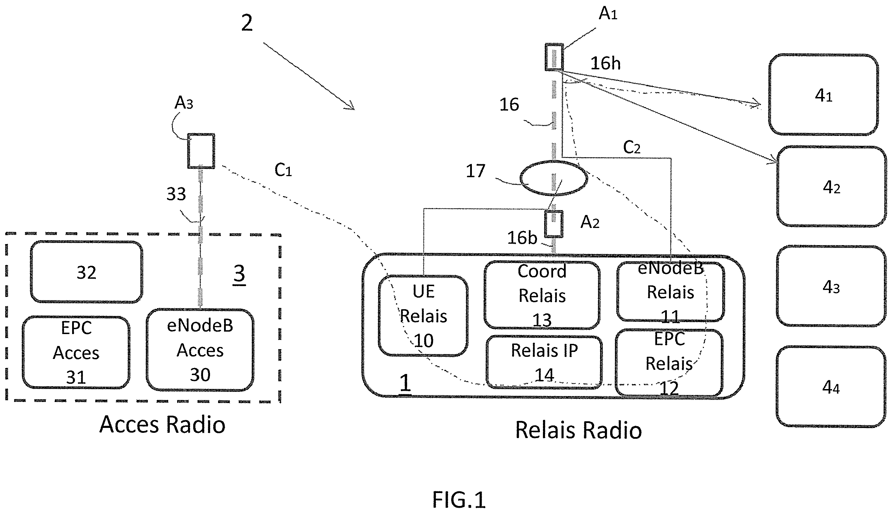

La figure 1 schématise un exemple d'architecture du relais selon l'invention comprenant, un réseau de communication mobile 2, une station relais radio 1, une station accès radio 3 et plusieurs utilisateurs 4k avec k=1, 2, 3 et 4.

Le relais radio 1 comprend un modem UE relais 10, une station eNodeB 11 et un EPC 12 assurant l'accès au terminaux utilisateurs, un routeur IP 13 aiguillant les flux soit vers les terminaux directement raccordés au véhicule assurant la fonction de relais, soit vers l'EPC desservant les usagers terminaux mobiles, un fonction de configuration et de coordination des différents élément du relais 14. Le relais radio 1 comporte aussi un mât 16 sur lequel sont positionnées, dans la partie supérieure 16h une première antenne A₁ eNodeB relais jouant un rôle de relais dans la transmission des signaux et des données et, dans la partie inférieure 16b une deuxième antenne A₂ ayant une fonction d'accès..

La deuxième antenne A₂ correspondant à l'antenne équipement utilisateur est située en bas du mât. L'antenne A₂ est une antenne directive dont les caractéristiques sont choisies afin de permettre l'isolation spatiale avec l'antenne relais disposée dans la partie supérieure du mât. Cette isolation est nécessaire afin d'éviter que les deux antennes ne se perturbent l'une et l'autre dans leur fonctionnement.

La première antenne UE relais, A₁, possède un diagramme de rayonnement disposé essentiellement dans le plan horizontal. Le diagramme de rayonnement dans le plan vertical doit être le plus faible possible (gain et ouverture).

La deuxième antenne UE, A₂, présente des caractéristiques de type antenne omnidirectionnelle afin d'assurer une fonction d'accès. Elle présente, comme la première antenne A₁, un diagramme de rayonnement dans le plan vertical le plus faible possible (gain et ouverture). Dans le plan vertical, l'antenne d'accès A₂ est située à la verticale sous l'antenne relais A₁; l'antenne d'accès et l'antenne relais sont, dans ce plan vertical, équivalentes au niveau des caractéristiques à des antennes directives avec un faisceau ou pinceau de quelques degrés d'ouverture, par exemple. Dans le plan horizontal, l'antenne d'accès est également directive, alors que l'antenne relais offre une couverture sectorisée, typiquement 60°, 120° ou 180°.

Le relais selon l'invention comporte aussi une fonction d'activation et une fonction de coordination des transmissions permettant la mise en oeuvre de la fonction de relayage. La fonction de coordination est implémentée au sein du réseau de communication.

L'accès radio 3 comprend un accès eNodeB 30, un accès EPC (Evolved Packet Core) 31 et un routeur en amont 32. L'accès radio comprend aussi une antenne d'accès eNodeB A₃ disposée sur un mât 33.

La fonction de relayage s'appuie sur une station eNodeB qui doit être en relation directe avec la fonction du coeur du réseau mobile ou EPC du noeud relais (11,12) pour être opérationnelle. Cela suppose une séquence de mise en oeuvre particulière tout d'abord de la fonction d'accès UE Relais 10 vers l'eNodeB Access 30 et l'EPC access 31, puis de la fonction relais eNodeB 11 et la fonction EPC relais 12. La fonction d'accès (30, 31) supporte la connectivité vers le routeur amont 32 situé dans les centres de données de l'opérateur.

La fonction de relayage est activée quand le chemin C₁ pour les données entre le coeur réseau et un équipement est établi et que le routeur 32 a établi une route vers le relais IP 13.

La figure 1 illustre en traits pointillés un premier chemin C₁ pour les données entre le coeur réseau et un équipement utilisateur 4₁, 4₂, 4₃, 4₄. Les données émises depuis l'opérateur transitent par l'eNodeB accès, sont reçues au niveau de l'antenne UE de l'eNode B qui relaie les données vers l'antenne relais de l'eNodeB 30 avant leur transmission vers un équipement utilisateur.

La figure 1 illustre aussi en traits pleins C₂ la connexion des éléments entre eux. Au niveau de l'eNodeB relais 11, l'antenne UE A₂ est connectée via une liaison physique C₂ à l'antenne relais A₁.

Au niveau de l'eNodeB relais 11, les interférences entre l'antenne relais A₁ et l'antenne UE A₂ sont minimisées par l'agencement spécifique vertical dans le plan vertical, décrit précédemment.

Pour traiter des interférences résiduelles, le relais radio 1 peut comporter une isolation complémentaire obtenue par l'ajout d'un élément séparateur isolant de type 'casquette', 17, évitant toute propagation directe entre les lobes secondaires de chacune des deux antennes. Les caractéristiques géométriques et fonctionnelles de la casquette 17 seront choisies en fonction des caractéristiques de fonctionnement du réseau.

Selon un autre mode de réalisation, l'antenne A₂ au niveau de l'UE relais peut être une antenne active capable de réaliser une fonction de réjection de signal dans une direction donnée. Cette direction, dans la présente invention, sera définie en fonction de la position et de la direction d'émission de l'antenne de l'eNodeB relais.

Le système ainsi réalisé met donc en oeuvre deux stations eNodeB (eNodeB accès et eNodeB relais). L'eNodeB accès reçoit les mesures d'interférences résiduelles de l'UE relais 10 dont certaines peuvent correspondre à l'eNodeB relais 11. Ces ultimes interférences résiduelles, qui peuvent être causées par des réflexions liées à l'environnement de propagation, sont traitées par le standard via la mise en oeuvre d'une fonction d'annulation interférence nécessitant un dialogue direct entre l'eNodeB relais 11 et l'eNodeB accès 30 (via le protocole X2 qui correspond à un protocole de communication entre deux stations eNodeB et qui est défini dans la norme LTE s'exécutant sur le lien eNodeB accès-UE relais). Les deux eNodeB ont chacun une adresse IP propre. Un eNode connaît l'adresse IP de l'autre eNodeB par configuration ou l'apprend dynamiquement depuis un centre de gestion et de configuration du réseau LTE.

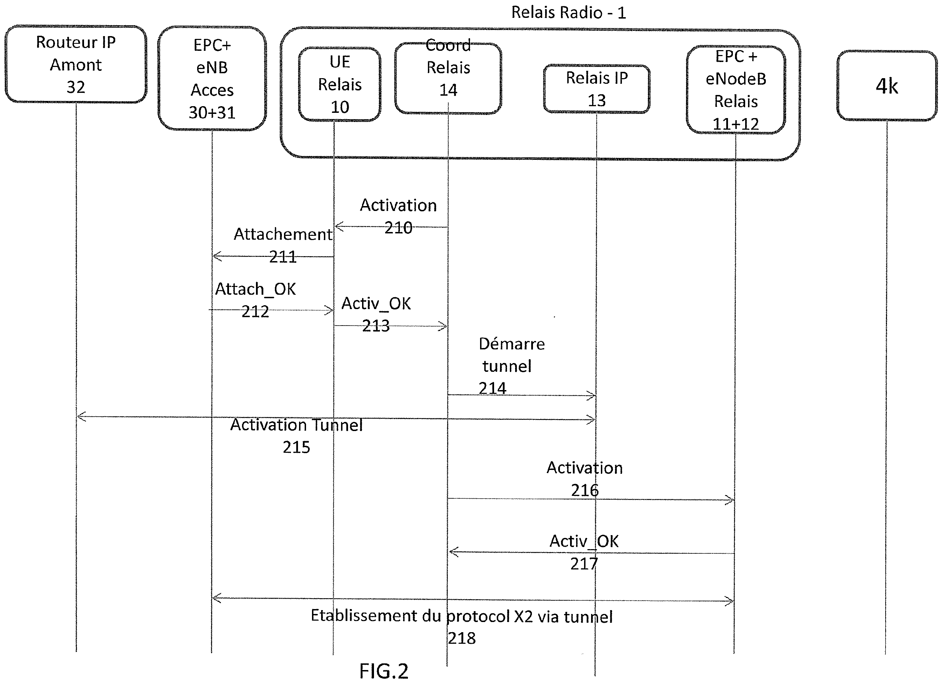

La figure 2 illustre les étapes permettant l'établissement de la fonction de relais. Le protocole X2 est démarré automatiquement par les deux eNodeB dès lors qu'ils auront été déclarés comme eNodeB adjacents par la configuration du réseau LTE.

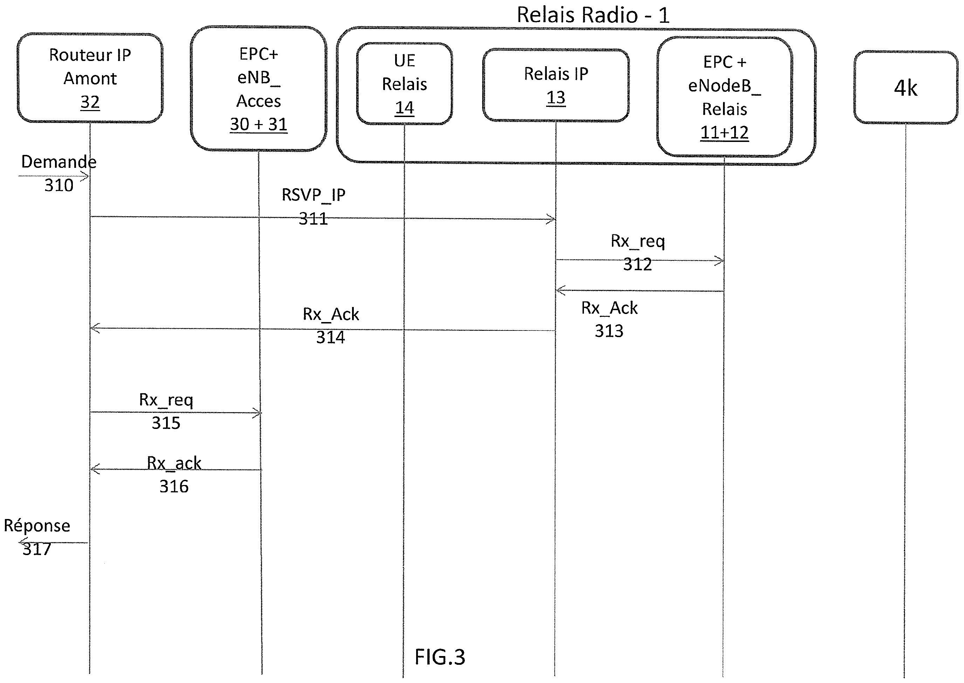

La fonction relais située au niveau de l'eNodeB relais a notamment deux objectifs :
1) Assurer le démarrage de l'eNodeB relais après l'établissement du lien EPC←>eNodeB accès←>UE relais et établir le lien X2 de coordination du spectre entre les eNodeB relais et accès afin d'éviter ou de limiter les interférences. Le procédé selon l'invention propose une séquence de démarrage coordonnée indépendante des implémentations des constructeurs et qui garantit le bon fonctionnement du procédé. Cette séquence de démarrage comprend, par exemple, les phases suivantes :
   - La fonction de coordination relais active le terminal, 210, lequel s'accroche 211 à l'eNodeB d'accès 31 selon les protocoles définis par le standard 3GPP,
   - Une fois les messages 212/213 reçus la fonction relais active l'eNodeB et l'EPC relais avec une commande 216,
   - L'eNodeB et l'EPC relais (11, 12) démarrent la pile protocolaire LTE,
   - Lorsque l'EPC et l'eNodeB relais 11+12 sont prêts à véhiculer du trafic usager (message 217), le relais IP utilise sa table de routage (non représentée pour des raisons de simplification) pour que le trafic à destination ou en provenance des terminaux raccordés à l'eNodeB relais soit transmis entre le terminal de relais 10 et l'eNode B 11 et l'EPC de relais12.
2) Assurer la mise en oeuvre d'un tunnel entre le couple EPC relais 12 + eNodeB relais 11, et un routeur 32 situé en amont de l'EPC d'accès 30, au-dessus du lien eNodeB accès et de l'équipement utilisateur UE relais. Ce tunnel est créé par la fonction de coordination relais de l'EPC. Il commence donc au niveau du routeur 32 situé devant l'EPC d'accès 30 et se termine au niveau de la fonction relais, comme il est décrit ci-après et illustré à la figure 3.

Le Routeur en amont 32 possède une fonction de coordination relais. Lorsqu'un utilisateur souhaite émettre un appel téléphonique, il est nécessaire de mettre en place des mécanismes de qualité de service entre, ce routeur 32, la fonction de relais IP 13, l'EPC en accès 31, l'EPC en relais 12 et un équipement utilisateur 4k. Pour assurer cette qualité de service sur les deux bonds radio LTE, le procédé est le suivant :
- Le routeur amont 32 identifie la demande de traitement d'un flux phonie via un protocole d'identification (par exemple le protocole d'initialisation de session SIP), 310,
- Le routeur amont 32 traduit ce message M₁ en un message de demande de réservation vers le relais IP 13, en utilisant par exemple le protocole RSVP_IP, (sur la figure on passe par le relais IP),
- Le relais IP 13 traduit cette requête RSVP en une demande AA-Request conforme à la norme 3GPP TS 29.214 vers l'EPC relais qui 12 effectue la réservation de ressources sur l'eNodeB relais 11, 312,
- L'EPC relais 12 répond positivement au relais IP 13 via un message AA-Answer 313. Le relais IP traduit ce message en message 314 de confirmation RSVP vers le routeur amont 32,
- Le routeur amont 32 émet un message de demande de réservation vers L'EPC d'accès (e.g AA Request), 315, en augmentant le débit demandé de la valeur nécessaire à la mise en oeuvre d'une encapsulation des paquets pour réaliser un tunnel,
- L'EPC d'accès 31 effectue la réservation de ressources sur le eNodeB d'acces 30,
- L'EPC d'accès 31 répond positivement au routeur amont 32, AA Answer 316,
- Le routeur amont 32, répond positivement au demandeur de la requête, 317.

L'invention peut être utilisée dans le cas d'une application LTE utilisant un protocole de communication OFDMA, mais peut s'appliquer également à toute norme de radiocommunication qui permet de découper l'usage d'une ressource spectrale unique selon un partage fréquentiel du spectre et pour lequel ledit partage fréquentiel peut se faire de manière dynamique en fonction d'au moins un critère de demande de bande passante par au moins une application demandeuse externe.

## Revendications

1. Relais radio destiné à être utilisé dans un système de communication comprenant au moins un réseau de communication (2), une station de base accès (3), une station de base relais (1) comprenant un équipement utilisateur relais et plusieurs utilisateurs (4ₖ), **caractérisé en ce qu'**il comporte au moins les éléments suivants :
• Une première antenne A₁ disposée en haut (16h) d'un mât (16) jouant un rôle de relais, ladite première antenne possédant un diagramme de rayonnement disposé essentiellement dans le plan horizontal,
• Une deuxième antenne A₂ située en bas (16b) du mât (16) présentant des caractéristiques omnidirectionnelles afin d'assurer une fonction d'accès et un diagramme de rayonnement dans le plan vertical le plus faible possible (gain et ouverture),
• La deuxième antenne A₂ étant située à la verticale sous la première antenne A₁,
• Une fonction relais configurée pour assurer la mise en oeuvre d'un tunnel entre la station de base relais, la station de base accès et un utilisateur.

2. Relais radio selon la revendication 1 **caractérisé en ce que** la fonction relais est adaptée à :
• Assurer le démarrage de la station de base relais après l'établissement d'un lien entre le réseau←>la station de base accès←>la station de base relais,
• Assurer la mise en oeuvre d'un tunnel généré par une fonction de coordination du réseau entre la station de base relais et le réseau au-dessus du lien station de base accès et de l'équipement utilisateur UE relais,
• Assurer la mise en oeuvre d'un tunnel entre la fonction relais et la fonction coordination relais.

3. Relais radio selon l'une des revendications 1 ou 2 **caractérisé en ce que** la première antenne A₁ et la deuxième antenne A₂ sont dans le plan vertical, équivalentes à des antennes directives avec un pinceau de quelques degrés d'ouverture et **en ce que** dans le plan horizontal la deuxième antenne A₂ est adaptée pour offrir une couverture sectorisée choisie parmi 60°, 120° ou 180°.

4. Relais radio selon l'une des revendications précédentes **caractérisé en ce qu'**il comporte un élément (17) adapté à éviter la propagation des lobes secondaires desdites première et deuxième antennes A₁ A₂, ledit élément isolant étant disposé sur le mât entre les deux antennes A₁, A₂.

5. Relais radio selon l'une des revendications 1 à 4 **caractérisé en ce que** la deuxième antenne A₂ est une antenne active adaptée à rejeter du signal dans une direction donnée.

6. Procédé mis en oeuvre dans le relais selon l'une des revendications précédentes **caractérisé en ce qu'**il utilise :
• une première antenne A₁ disposée en haut (16h) d'un mât (16) jouant un rôle de relais, ladite première antenne possédant un diagramme de rayonnement disposé essentiellement dans le plan horizontal,
• Une deuxième antenne A₂ située en bas (16b) du mât (16) présentant des caractéristiques omnidirectionnelles afin d'assurer une fonction d'accès et un diagramme de rayonnement dans le plan vertical le plus faible possible (gain et ouverture),
• La deuxième antenne A₂ étant située à la verticale sous la première antenne A₁,
• Une fonction relais pour assurer la mise en oeuvre d'un tunnel entre la station de base relais, la station de base accès et un utilisateur.

7. Procédé selon la revendication 6 **caractérisé en ce que** la fonction relais est adaptée à exécuter au moins les étapes suivantes :
• Assurer le démarrage de la station de base relais après l'établissement d'un lien entre le réseau←>la station de base accès←>la station de base relais,
• Assurer la mise en oeuvre d'un tunnel généré par une fonction de coordination du réseau entre la station de base relais et le réseau au-dessus du lien station de base accès et de l'équipement utilisateur UE relais,
• Assurer la mise en oeuvre d'un tunnel entre la fonction relais et la fonction coordination relais.

8. Procédé selon l'une des revendications 6 ou 7 **caractérisé en ce qu'**il comporte au moins les étapes suivantes :
Une fonction de coordination relais active le terminal, (210) ledit terminal s'accroche (211) à l'eNodeB accès (31) selon un protocole donné,
Une fois les messages (212, 213) reçus une fonction relais active l'eNodeB et l'EPC relais (216),
L'eNodeB et le EPC relais (11, 12) démarrent une pile protocolaire,
Lorsque l'EPC relais et l'eNodeB (12, 11) sont prêts à véhiculer du trafic usager message (217), le relais IP utilise sa table de routage afin que le trafic à destination ou en provenance des terminaux raccordés à l'eNodeB relais soit transmis entre le terminal de relais (10) et l'eNodeB (11) et l'EPC relais (12),
On établit un tunnel entre le couple (EPC relais (12), eNodeB relais (11)), et un routeur (32) situé en amont de l'EPC d'accès (30) au-dessus du lien eNodeB accès (30) et de l'équipement utilisateur UE relais.

9. Procédé selon la revendication 8 **caractérisé en ce qu'**il utilise des mécanismes de qualité de service entre le routeur (32), la fonction de relais IP (13), l'EPC accès (31), l'EPC relais (12) et un équipement utilisateur (4k) et en exécutant les étapes suivantes :
Le routeur amont (32) identifie la demande de traitement, message M₁, d'un flux phonie via un protocole d'identification (310),
Le routeur amont (32) traduit ce message M₁ en un message de demande de réservation vers l'EPC relais (12),
L'EPC relais (12) effectue la réservation de ressources sur l'eNodeB relais (11), (312),
L'EPC relais (12) répond positivement (313, 314),au routeur amont (32),
Le routeur amont (32) transmet un message de demande de réservation vers L'EPC accès, (315), en augmentant le débit demandé de la valeur nécessaire à la mise en oeuvre d'une encapsulation des paquets pour réaliser un tunnel,
• L'EPC d'accès (31) effectue la réservation de ressources sur l'eNodeB d'accès (30),
• L'EPC d'accès (31) répond positivement (316) au routeur amont (32),
• Le routeur amont (32), répond positivement (317) au demandeur de la requête.
